# EUROPEAN PATENT APPLICATION

(11) **EP 1 921 879 A1**
(43) Date of publication of application: **14.05.2008**
(21) Application number: 07120240.2
(22) Date of filing: 08.11.2007
(51) Int. Cl.: H04Q 7/36, H04Q 7/30

(54) **Base station operation**

(30) Priority: 10.11.2006 GB 0622401; 05.01.2007 GB 0700171
(71) Applicant: Nokia Siemens Networks GmbH & Co. KG, 81541 München (DE)
(72) Inventor: Phillips, Ian Lasseter, Romsey, Hampshire SO51 8PN (GB); Thomas, David Wynne, Romsey, Hampshire SO51 7DB (GB)
(74) Representative: Ruuskanen, Juha-Pekka

(57) **Abstract**

A method of operating a local base station (BS1) in a communication system comprising at least one network base station (BS2), a local base station and a local terminal (L1) comprises allowing the local base station to transmit when in possession of an authorisation code from the network base station, and otherwise suppressing transmissions.

## Description

This invention relates to a method of operating a local base station in a communication system and controlling interference.

Mobile network operators are considering selling 3G base stations to the consumer market for user installation in homes providing a similar functionality to that currently provided by Wireless LAN and DECT. A home user could use their regular 3G mobile phone and 3G equipped laptop away from the home using the existing mobile network infrastructure, but when at home they could benefit from higher data rates and/or lower tariffs by using their home base station

In this description, the term pico base station is used to refer to the consumer installed 3G base station and the terms micro and macro base stations refer to 3G networked base stations, not controlled by the consumer. Generally, macro base stations cover a wide area, typically several kilometres in radius in the urban environment and provide public access i.e. to all users supported by that operator. Micro base stations offer the same functionality, but cover a smaller area, typically small urban sites, such as large shopping complexes, or railway stations. Both Macro and Micro deployment require an expert installation where the sites are carefully chosen, typically a-priori radio planning is involved, and installation is by expert engineers who are able to make on-site adjustments. Pico basestations cover a much smaller area, such as a single room, or single house and have ranges typically of a few 10's of metres, with typically theoretical free space range limits of 100 to 200 metres. Home Pico stations mandate a user non-expert installation due to cost and practical constraints, since expert engineer time is too expensive and there are too few to support a large scale domestic deployment.

The operators intend that the pico base stations be available for purchase from high street stores, for installation by the user in their own home, although there may also be a market for such base stations in individual shops, or small offices which cannot justify installing their own network. However, mobile networks have traditionally been carefully planned and installed by engineers who take great care to reduce the amount of interference produced and received by a new base station installation, when it is added to the existing network. Consumers are unlikely to have the required knowledge, or motivation, to carry out a full analysis of the implications of their choice of location and operation for the pico base station, potentially giving rise to situations where the levels of interference received at the pico base station mean that the pico base station does not perform as advertised, or interference produced by the pico base station causes significant reduction of capacity for a near by base station with wide area coverage. There may also be situations where the constraints of carrier availability are such that the pico Node B has to use a carrier which is otherwise used by the macro network.

This problem has not been addressed for this situation, but techniques exist as part of the wireless LAN standards (e.g. 802.11) where different systems in the same geographical area avoid interfering with each other by various methods, such as making measurements of interference on a number of candidate channels; using beacon transmissions; or ALOHA-type schemes where a system will introduce a random backoff before attempting to retransmit a failed data packet. These techniques cannot be applied to the case of a pico Node B without requiring changes to the relevant standards.

In accordance with a first aspect of the present invention a method of operating a local base station in a communication system comprising at least one network base station, a local base station and a local terminal, the method comprising allowing the local base station to transmit when in possession of an authorisation code from the network base station, and otherwise suppressing transmissions.

The present invention addresses the problems of interference and mitigation of this interference for consumer installed base stations.

Preferably, the local terminal passes the authorisation code from the network base station to the local base station with a request for resources.

Preferably, the local terminal synchronises with the or each network base station, runs an application to report suitability of the current location to the or each network base station, and receives from the or each network base station the authorisation code and a permitted transmit power.

Preferably, the network base station estimates the permitted local base station transmit power level based on a local terminal report, generates the corresponding authorisation code and passes the authorisation code and permitted power level to the local terminal.

Preferably, the local terminal passes both the permitted transmit power and authorisation code from the network base station to the local base station, to authorise the local base station to operate at the permitted power level and to synchronise with the network base station.

Preferably, the local terminal is arranged so as to initiate requests to an otherwise silent local base station.

Preferably, the local base station transmits at a power up to the permitted transmit power.

Preferably, an authorisation code is requested periodically and transmission by the local base station ceases if no suitable authorisation code is received in response to the most recent request.

Preferably, the local terminal downloads, stores and runs an application and stores an authorisation code determined using the application, prior to deployment of a local base station.

Preferably, a permitted transmit power at the local base station increases with increasing distance from the nearest network base station.

Preferably, suitability for a local base station of a current location of a local terminal is determined based on a radio survey.

In accordance with a second aspect of the present invention, a method of determining a permitted location of a local base station in a communication system comprising a network base station, a local base station and a local terminal comprises downloading an application to the local terminal, setting up a call between the local terminal and the network base station from the desired location of the local base station; using data from the transmissions between the network base station and the local base station in the application to calculate the expected local base station performance at that location; comparing the expected performance to a threshold to determine whether or not the location is a permitted one; allocating an authorisation code from the network base station to the local terminal for passing to the local base station for authorising service.

In accordance with a third aspect of the present invention, a method of controlling interference in a communication system comprising at least one network base station, a local base station and a local terminal comprises requiring the local base station to achieve power synchronisation with the network base station before setting up any communication between the local base station and the local terminal; wherein the local terminal runs an application to determine the suitability of a location for installation of a local base station; and, wherein the network base station issues an authentication code to the local terminal after determining suitability of a particular location for the local base station.

Preferably, power synchronisation between the local base station and the network base station is initiated in response to a request from the local terminal to the local base station for resources.

Preferably, the local base station requests the authorisation code from the local terminal before acting on a power synchronisation request.

An example of a method of controlling interference in a communication system in accordance with the present invention will now be described with reference to the accompanying drawings in which:
Figure 1 illustrates a typical arrangement of local and network base stations operating in accordance with the present invention;
Figure 2 illustrates determining a suitable location for a local base station in accordance with the present invention;
Figure 3 is a message sequence chart for a first example of operation according to the present invention; and,
Figure 4 is a message sequence chart for a second example of operation according to the present invention.

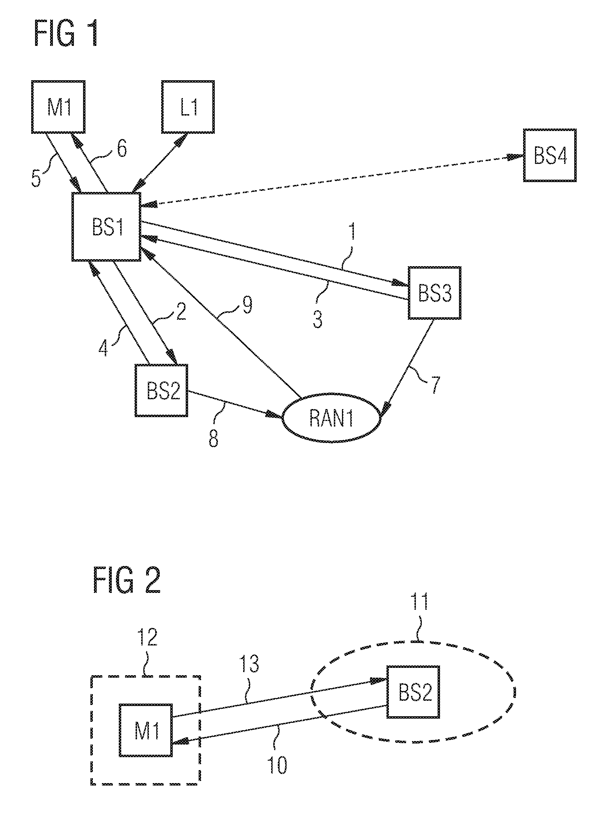

In Fig.1, a first base station BS1, or pico node B is installed by a consumer in their home and set up to operate with the consumer's mobile phone M1 and laptop L1. The chosen location is relatively close to a network base station BS2, or macro node B and to another base station BS3, or micro node B, so these will have some influence on the operation of the first base station BS1. A fourth base station BS4 is considered sufficiently far away to not need to be taken into account.

In a first example, the pico node B BS1 incorporates some mobile functionality. The pico node B periodically attempts to access 2, 1 the nearby macro node B BS2, or the micro node B BS3. Access from BS1 must be sufficient to achieve power control, as would occur for example in 3GPP, when a physical dedicated channel (PDCH) is established between the UE function at the Node B and base station The closed loop power control information is enough to estimate how close the pico node B BS1 is to the macro node B BS3 and accurately estimate the maximum power that can be transmitted by pico node B BS1 and also the power transmitted by the mobile M1, or laptop L1, under the control of the pico node B BS1. If the pico node B is close to the macro node B, i.e. the power allocated 4 by the macro node B is low, then the pico node B allocates no more than that amount of power in uplink (UL) 5 and has a relatively small range of operation With respect to macro node B BS3, the power allocated 3 is greater, but if the pico node B is far from the macro node B, e.g. BS4 and the power allocated by the macro node B is high, then the pico node B is allowed to allocate a greater amount of power in UL 5 and has a relatively large area of operation The downlink (DL) 6 power is similarly controlled in order to maintain a consistent pico cell size. The start up procedure may occur when the pico node B BS1 is powered up, it may occur periodically, or whenever a pico mobile M1 attempts to communicate via the pico Node B. When the mobile M1 attempts to communicate, it sends to the pico Node B, an authorisation code which has been allocated by the macro Node B.

An extension to this method is one in which the macro radio access network (RAN1) uses the initial pico node B access 1, 2 to determine the potential impact on the macro cell with signals 7, 8 from BS2 and BS3 and, together with information on cell loading, to allocate a suitable amount of DL and UL power 9 to the pico cell BS1.

The advantage of this method is that by requiring the pico node B BS1 to register with the macro cell and determine its maximum allowable UL and DL power, the interference (and therefore capacity loss) in the macro cell can be limited. The pico node B automatically sets its power level, so that it does not interfere with any outside network. The pico node B achieves power synchronisation by logging on and establishing a dedicated channel.

In a second example, shown in Fig. 2, a potential pico node B owner downloads 10 an application to his mobile terminal M1 which sets up a call 13 with a macro base station BS2 of cell 11 from the position 12 where he wishes to locate his pico node B. Based on received signal strength, allocated UL power and, where available, an estimate of the user's position, the application calculates an estimate of the performance the user could expect from installation of a pico node B BS1 at that location. The macro base station then issues an authorisation code to the terminal.

The advantage of this method, whereby a potential user can make a survey of a potential Pico Node B location before purchase, is that this avoids disappointment when a user purchases a Pico Node B for use in their home and finds that the performance of the system, being directly affected by the location of the Pico Node B in relation to the Macro Node B, is lower than expected. Furthermore, the operator is able to prevent interference with the wider network resulting from unsuitable location of a pico Node B, such as in direct line of sight to a macro Node B. This could be further controlled by requiring a radio survey and allocating the authorisation code to the user before they can complete their purchase. The operator can then check that the pico Node B does get located in the correct position by using methods such as those described in our co-pending applications EP06120264.4 and EP06120267.7.

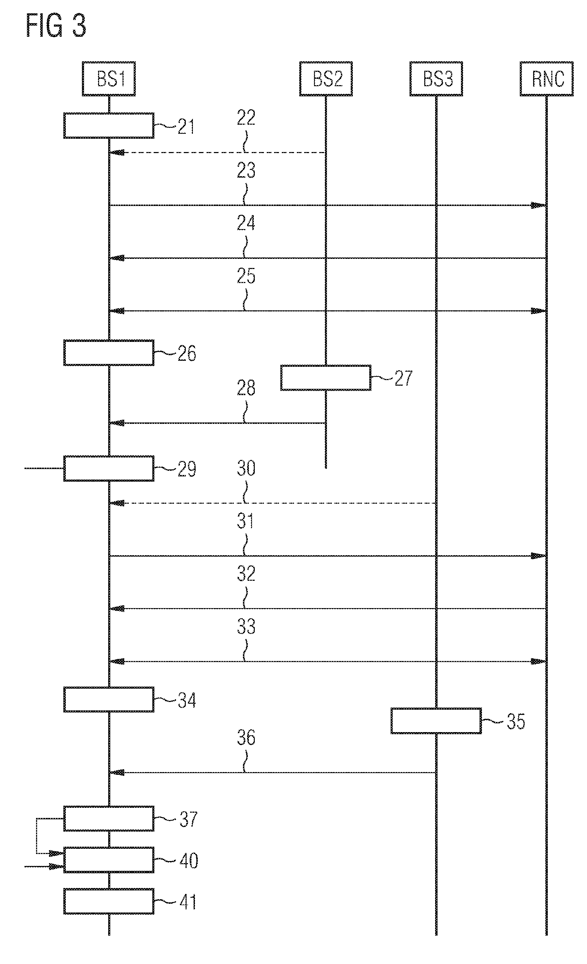

Corresponding to the first example of Fig. 1, Fig. 3 is a message sequence chart illustrating how the pico Node B BS1 interacts with BS2 and BS3 to achieve an appropriate power estimate. Pico node B BS1 enters UE mode 21 and searches for neighbouring base stations. The Pico Node B detects a synchronisation channel (SCH) and broadcast channel (BCH) 22 of BS2. BS1 then requests a radio resource control (RRC) connection 23 from BS2 and a radio network controller (RNC) associated with BS2 grants the RRC connection establishing a dedicated physical channel (DPCH) by providing the DPCH parameter in the response 24. BS1 continues the registration process over this DPCH on RRC direct transfer of (NAS signalling) 25. During this process closed loop power control occurs between BS1 and BS2. BS1 is able to make measurements of the downlink power of the RRC direct transfer 25, BS2 makes uplink power measurements 27 for L1 and corrects the UE power output with L2 power control 28. Corresponding DL L1 measurements are made 26. This gives BS1 accurate power level information which it stores as a pico node B power estimation 29. Similarly the process repeats for BS3 (not shown) with corresponding steps of detecting SCH and BCH 30, sending an RRC connection request 31, receiving RRC connection response with DPCH parameters 32 and RRC direct transfer (NAS signalling) 33, then making DL L1 measurements 34 and UL L1 measurements 35 and using this for L1 power control 36 to produce a pico power estimation 37 for BS3. BS1 can then make a best power estimate with knowledge of permitted power levels from BS2 and BS3 40, then enter BS Mode 41. The estimation of power levels is part of the authorisation procedure and an authorisation code is allocated, so that future requests from a UE include the authorisation code, to ensure that the pico Node B operates at an acceptable power level.

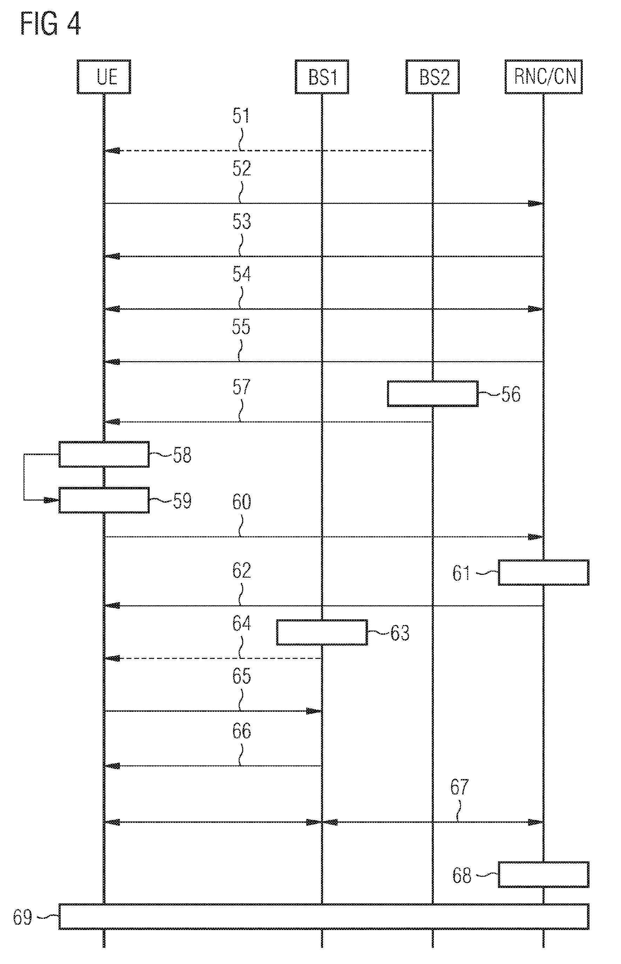

Corresponding to the second example, Fig. 4 shows a message sequence chart illustrating how a UE interacts with BS2 to achieve an appropriate power estimate, such that pico operation might be authorised. The UE detects the synchronisation channel (SCH) and broadcast channel (BCH) 51 of BS2. The UE then requests an RRC connection 52 from BS2, the RNC associated with BS2 grants the RRC connection establishing a dedicated physical channel (DPCH) and providing the DPCH parameters with the response 53. The UE continues the registration process over this DPCH 54 with direct transfer (NAS signalling). During this process the Pico survey application is downloaded 55, closed loop power control occurs between the UE and BS2. BS2 makes uplink power measurements 56, and corrects the UE power output 57 using L1 power control. The UE is able to make measurements of the downlink power 58. This gives the UE accurate power level information which is used by the Pico application to make the necessary power/performance estimates 59. These are confirmed to the CN in a RRC pico application again and the CN 60 constructs a 'pico authentication token' 61, and returns 62 this token to the UE. The pico base station BS1 is then installed and enabled 63. Similarly the process repeats for BS3 (not shown). BS1 can then make a best power estimate with knowledge of permitted power levels from BS2 and BS3 40, then enter BS Mode 41. The UE detects the Synchronisation Channel (SCH) and Broadcast Channel (BCH) 64 of BS1. The UE then requests a Radio Resource Control (RRC) connection 65 from BS 1, BS1 grants the RRC connection establishing a Dedicated Physical Channel (DPCH) 66. The UE continues the registration process over this DPCH 67 including passing the previously obtained authentication token 67 to the CN which authorises service 68. Normal operation then continues 69.

## Claims

1. A method of operating a local base station in a communication system comprising at least one network base station, a local base station and a local terminal, the method comprising allowing the local base station to transmit when in possession of an authorisation code from the network base station, and otherwise suppressing transmissions.

2. A method according to claim 1, wherein the local terminal passes the authorisation code from the network base station to the local base station with a request for resources.

3. A method according to claim 1 or claim 2, wherein the local terminal synchronises with the or each network base station, runs an application to report suitability of the current location to the or each network base station, and receives from the or each network base station the authorisation code and a permitted transmit power.

4. A method according to claim 3, wherein the network base station estimates the permitted local base station transmit power level based on a local terminal report, generates the corresponding authorisation code and passes the authorisation code and permitted power level to the local terminal.

5. A method according to claim 3 or claim 4, wherein the local terminal passes both the permitted transmit power and authorisation code from the network base station to the local base station, to authorise the local base station to operate at the permitted power level and to synchronise with the network base station.

6. A method according to at least claim 2, arranged so as to initiate requests to an otherwise silent local base station.

7. A method according to claim 5 or claim 6, wherein the local base station transmits at a power up to the permitted transmit power.

8. A method according to any preceding claim, wherein an authorisation code is requested periodically and transmission by the local base station ceases if no suitable authorisation code is received in response to the most recent request.

9. A method according to any preceding claim, wherein the local terminal downloads, stores and runs an application and stores an authorisation code determined using the application, prior to deployment of a local base station.

10. A method according to any preceding claim, wherein a permitted transmit power at the local base station increases with increasing distance from the nearest network base station.

11. A method according to any preceding claim, wherein suitability for a local base station of a current location of a local terminal is determined based on a radio survey.

12. A method of determining a permitted location of a local base station in a communication system comprising a network base station, a local base station and a local terminal; the method comprising downloading an application to the local terminal, setting up a call between the local terminal and the network base station from the desired location of the local base station; using data from the transmissions between the network base station and the local base station in the application to calculate the expected local base station performance at that location; comparing the expected performance to a threshold to determine whether or not the location is a permitted one; allocating an authorisation code from the network base station to the local terminal for passing to the local base station for authorising service.

13. A method of controlling interference in a communication system comprising at least one network base station, a local base station and a local terminal; the method comprising requiring the local base station to achieve power synchronisation with the network base station before setting up any communication between the local base station and the local terminal; wherein the local terminal runs an application to determine the suitability of a location for installation of a local base station; and, wherein the network base station issues an authentication code to the local terminal after determining suitability of a particular location for the local base station.

14. A method according to claim 13, wherein power synchronisation between the local base station and the network base station is initiated in response to a request from the local terminal to the local base station for resources.

15. A method according to claim 13 or claim 14, wherein the local base station requests the authorisation code from the local terminal before acting on a power synchronisation request
